# EUROPEAN PATENT SPECIFICATION

(11) **EP 3 025 623 B1**
(45) Date of publication and mention of the grant of the patent: **04.07.2018**
(21) Application number: 14382474.6
(22) Date of filing: 26.11.2014
(51) Int. Cl.: A47J 31/36

(54) **Machine for preparing beverages**
Maschine zur Zubereitung von Getränken
Machine de préparation de boissons

(43) Date of publication of application: 01.06.2016
(73) Proprietor: Quality Espresso, S.A., 08040 Barcelona (ES)
(72) Inventor: Vicente Seguer, Carlos, 08040 Barcelona (ES)
(74) Representative: Carpintero Lopez, Francisco

(56) References cited:
- US-A1- 2013 064 948
- US-A1- 2013 269 536
- US-A1- 2014 299 000

## Description

The present invention relates to a machine for preparing beverages, for example coffee, from a product contained in a capsule.

### Background of the Invention

The use of capsules for preparing beverages, for example, for preparing coffee or tea, is very common today.

Machines for preparing beverages from a product contained in a capsule comprise a housing or receptacle where the capsule is placed, which capsule is perforated for injecting water therein. As the water mixes with the product inside the capsule the beverage is prepared and it then exits the machine into a container such as a cup or glass for consumption.

The user of the machine must handle these capsules by hand to place them in the housing or receptacle, with the possibility that the user touches the surface of the capsule that is going to be perforated, being able to deposit particles on the surface of the capsule.

Machines for preparing beverages from capsules that are known today comprise perforating means for perforating the surface of the capsule formed by a plurality of punches or needles which perforate virtually the entire surface of the capsule.

This plurality of punches or needles maximizes the risk of contaminating the beverage being prepared, with the subsequent effect this has on the prepared beverage quality. It is because the particles that may be deposited on the surface of the capsule by the user can be entrained into the capsule when it is perforated and water is injected into it.

US2013064948 A1 discloses a beverage production system comprising a capsule and a module for producing a beverage from the capsule, the capsule comprising an enclosure and a rim, and the module comprising: a first capsule engagement member, which can be displaced relative to a second, co-operating capsule engagement member between a capsule discharge position and a beverage production position.Therefore, the present invention seeks to minimize the risk of particles deposited on the outer surface of the capsule being able to get into said capsule while preparing the beverage, also minimizing the surface through which water is introduced into the capsule.

### Description of the Invention

The aforementioned drawbacks are solved with the machine for preparing beverages according to independent claim 1, having other advantages that will be described below.

The machine for preparing beverages according to the present invention comprises a receptacle for placement of a capsule housing a product for preparing a beverage; perforating means for perforating said capsule so as to allow the entrance of water into the capsule; and injection means for injecting water into said capsule so as to be mixed with the product housed in the capsule for preparing the beverage; and said perforating means comprise a single movable punch that can move between a standby position and an injection position.

Advantageously, the machine for preparing beverages according to the present invention also comprises a single fixed punch for perforating the capsule for the exit of the prepared beverage.

According to a preferred embodiment, said injection means for injecting water comprise a water inlet conduit passing through the inside of said movable punch.

Advantageously, said movable punch and said fixed punch are arranged in opposite positions with respect to the receptacle for the capsule.

The machine for preparing beverages according to the present invention preferably also comprises a holding element for holding said capsule.

Furthermore, said movable punch is mounted in a movable body that can move between the standby position and the injection position.

Said movable body moves to said injection position by means of a pushing body pushing against the action of a spring.

Said pushing body is a rotating helical cam contacting with a complementary cam in the movable body.

Furthermore, said fixed punch advantageously comprises an outlet conduit passing therethrough for the exit of the prepared beverage.

The machine for preparing beverages according to the present invention helps to minimize the possibilities of contaminating the product contained in the capsule while preparing the beverage, because the capsule is only pierced by means of a punch for introducing water into the capsule.

### Brief Description of the Drawings

To better understand the preceding description, a set of drawings has been attached in which a practical embodiment is depicted schematically and only by way of non-limiting example.

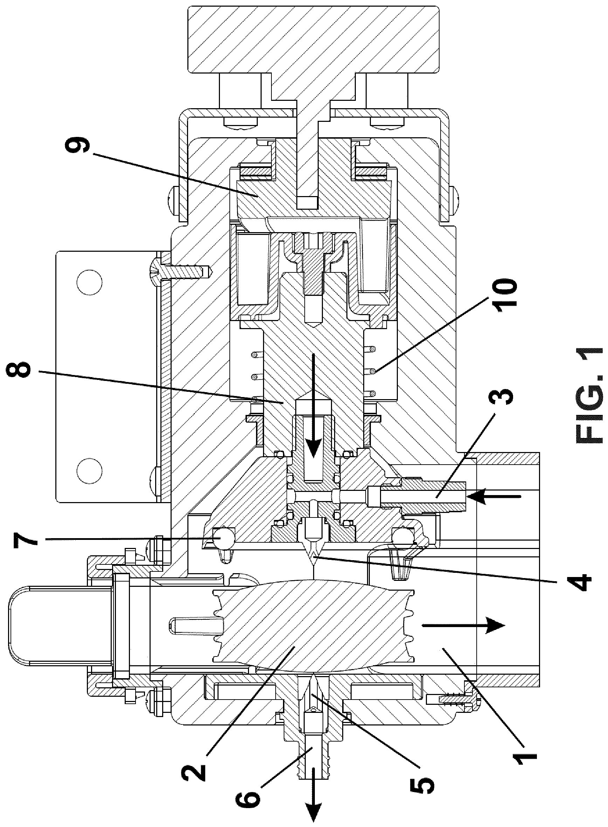

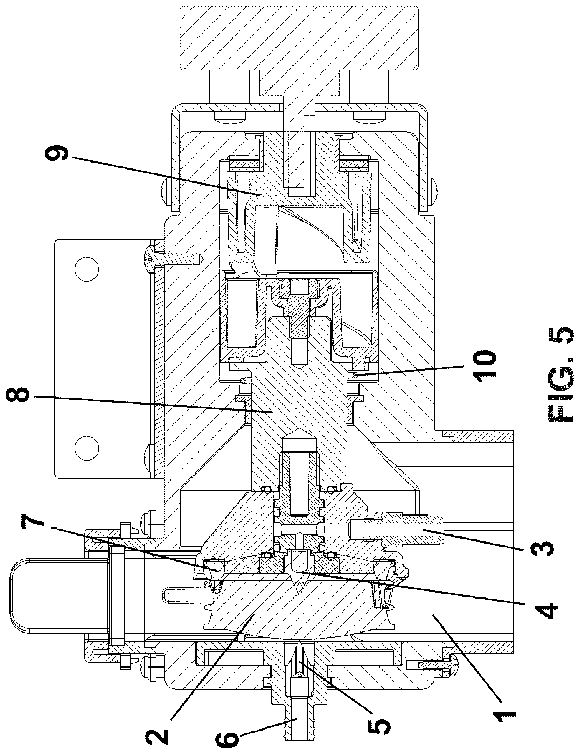

Figures 1 to 5 show elevational views of the machine for preparing beverages according to the present invention, showing the sequence for preparing a beverage, for example, coffee.

### Description of a Preferred Embodiment

As can be seen in the drawings, the machine for preparing beverages according to the present invention comprises a receptacle 1 where a capsule 2 is placed. As is usual, this capsule 2 internally houses a product, or a mixture of products, which when mixed with water prepare a beverage, for example, coffee, tea, infusions or any suitable beverage.

The machine according to the present invention also comprises a water inlet conduit 3, associated with a movable punch 4, through which water is introduced into the capsule, and a fixed punch 5 provided with an outlet conduit 6 passing through it, through which the prepared beverage exits.

As can be seen in the drawings, the movable punch 4 and the fixed punch 5 are placed in opposite positions with respect to the receptacle 1 of the capsule, preferably in a central position, such that the punches 4, 5 perforate the capsule 2 in the center of its front and rear faces. However, it must be indicated that said punches 4, 5 could be placed in any suitable position.

The machine according to the present invention also comprises a holding element 7, for example a ring made of an elastic material, holding the capsule 2 in its suitable position, as will be explained below.

This holding element 7 and the movable punch 4 in the depicted embodiment are mounted in a movable body 8 which moves longitudinally inside the machine describing a linear movement. This movement of the movable body 8 is actuated by means of a pushing body 9 pushing against the action of a coil spring 10, as described below.

According to the depicted embodiment, the pushing body 9 is a rotating helical cam provided with ramps contacting with a complementary cam provided with ramps in the movable body 8. The pushing body 9 is rotated by means of a motor not depicted in the drawings.

Figure 1 shows the machine for preparing beverages according to the present invention in a standby position, i.e., in the position in which the capsule 2 is expelled from the receptacle 1 by gravity.

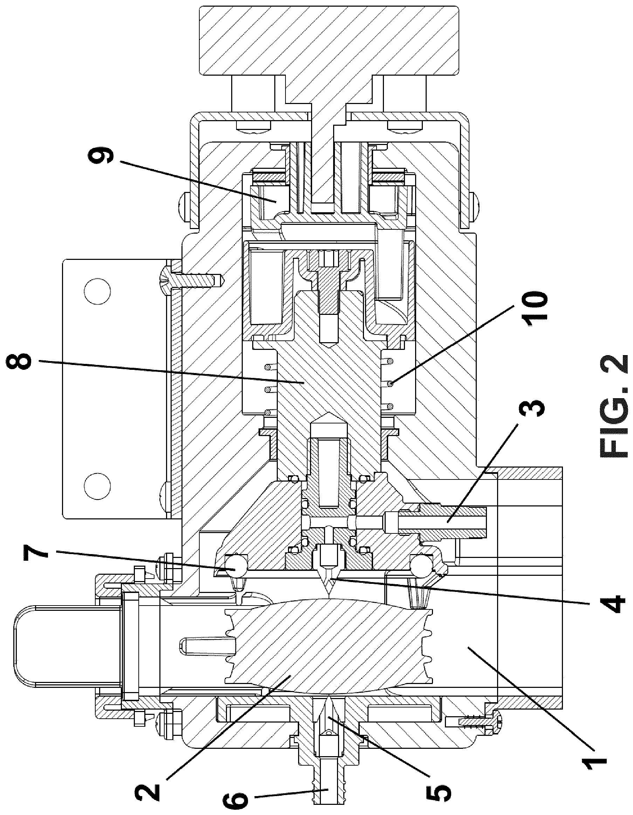

If a beverage is to be prepared, first a capsule 2 must be placed in the receptacle 1. To that end, the first movement that is made is to move the holding element 7 forward to the position depicted in Figure 2. In this position, when the capsule 2 is put in place, the holding element 7 will hold it, preventing it from falling and the capsule 2 being ready to start preparing the beverage.

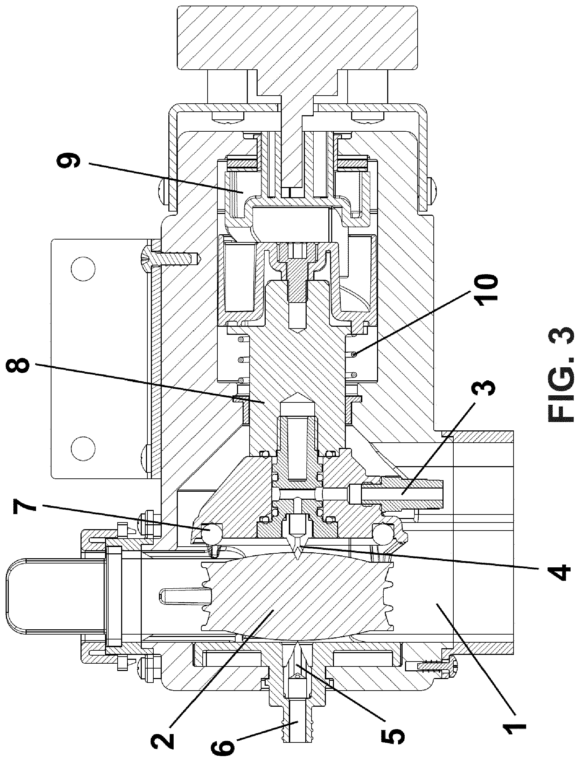

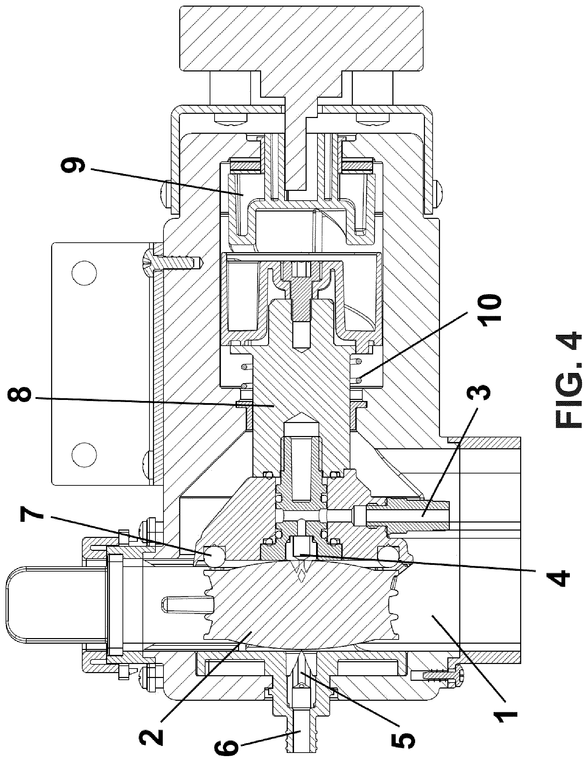

Then the rotational movement of the pushing body 9 is actuated, which pushing body 9, through the ramps of the cams, converts the rotational movement into translational movement of the movable body 8 against the action of the coil spring 10. This movement of the movable body 8 will cause the movement of the movable punch 4 and of the holding element 7 towards the capsule 2, as can be seen in Figures 3 and 4.

When the movable punch 4 has perforated the capsule 2 at a single point, preferably in a central position, pressurized water is injected into the capsule 2 through the inlet conduit 3. The pressurized water causes the capsule 2 to expand, in turn causing the capsule 2 to be perforated by the fixed punch 5, also at a single point.

This perforation by means of the fixed punch 5 allows the exit of the prepared beverage through the outlet conduit 6 for dispensing in a cup or glass for consumption.

It must be indicated that the perforation made by the fixed punch 5 does not allow the entrance of particles or contaminants because said perforation is made by expansion of the capsule 2 and because the prepared beverage will only come out through said perforation, but it will not enter the capsule.

Once the beverage has been prepared, the coil spring 10 will cause the pushing body 9 to move back to the standby position, depicted in Figure 1, together with the movable body 8, which in turn causes the movement of the movable punch 4 and of the holding element 7, also to the standby position. In this standby position, the capsule 2 already used for preparing the beverage is expelled out of the machine by gravity so it can be disposed of.

Despite having made reference to a specific embodiment of the invention, it is obvious for a person skilled in the art that the machine for preparing beverages that has been described is susceptible to a number of variations and modifications, and that all the details mentioned can be replaced with other technically equivalent details without departing from the scope of protection defined by the attached claims.

## Claims

1. Machine for preparing beverages, comprising:
- a receptacle (1) for placement of a capsule (2) housing a product for preparing a beverage;
- perforating means (4) for perforating said capsule (2) so as to allow the entrance of water into the capsule (2); and
- injection means (3) for injecting water into said capsule (2) so as to be mixed with the product housed in the capsule (2) for preparing the beverage;
said perforating means comprising a single movable punch (4) that can move between a standby position and an injection position,
wherein said movable punch (4) is mounted in a movable body (8) that can move between the standby position and the injection position, and
wherein said movable body (8) moves to said injection position by means of a pushing body (9) pushing against the action of a spring (10);
**characterized in that** said pushing body (9) is a rotating helical cam contacting with a complementary cam in the movable body (8).

2. Machine for preparing beverages according to claim 1, also comprising a fixed single punch (5) for perforating the capsule (2) for the exit of the prepared beverage.

3. Machine for preparing beverages according to claim 1, wherein said injection means for injecting water comprise a water inlet conduit (3) passing through the inside of said movable punch (4).

4. Machine for preparing beverages according to claims 1 and 2, wherein said movable punch (4) and said fixed punch (5) are arranged in opposite positions with respect to the receptacle (1) for the capsule (2).

5. Machine for preparing beverages according to any one of the preceding claims, also comprising a holding element (7) for holding said capsule (2).

6. -Machine for preparing beverages according to claim 2, wherein said fixed punch (5) comprises an outlet conduit (6) passing therethrough for the exit of the prepared beverage.

## Patentansprüche

1. Getränkezubereitungsmaschine, umfassend:
- einen Behälter (1) zum Platzieren einer Kapsel (2), die ein Produkt für die Zubereitung eines Getränkes aufnimmt;
- Perforierungsmittel (4) zum Perforieren der Kapsel (2), um so den Eintritt von Wasser in die Kapsel (2) zu gestatten; und
- Einspritzmittel (3) zum Einspritzen von Wasser in die Kapsel (2), um so mit dem in der Kapsel (2) aufgenommenen Produkt für die Zubereitung des Getränkes gemischt zu werden;
wobei die Perforierungsmittel eine einzelne bewegbare Stanze (4) umfassen, die sich zwischen einer Standby-Position und einer Einspritzposition bewegen kann,
wobei die bewegbare Stanze (4) in einem bewegbaren Körper (8) montiert ist, der sich zwischen der Position und der Einspritzposition bewegen kann, und
wobei sich der bewegbare Körper (8) in die Einspritzposition durch einen Schiebekörper (9) bewegt, der gegen die Wirkung einer Feder (10) schiebt;
**dadurch gekennzeichnet, dass** der Schiebekörper (9) ein sich drehender schraubenförmiger Nocken ist, der mit einem komplementären Nocken im bewegbaren Körper (8) in Kontakt gelangt.

2. Getränkezubereitungsmaschine nach Anspruch 1, ebenso umfassend eine fixierte einzelne Stanze (5) zum Perforieren der Kapsel (2) für den Austritt des zubereiteten Getränks.

3. Getränkezubereitungsmaschine nach Anspruch 1, wobei die Einspritzmittel zum Einspritzen von Wasser eine Wassereinlassleitung (3) umfassen, die durch die Innenseite der bewegbaren Stanze (4) verläuft.

4. Getränkezubereitungsmaschine nach den Ansprüchen 1 und 2, wobei die bewegbare Stanze (4) und die fixierte Stanze (5) in gegenüberliegenden Positionen in Bezug auf den Behälter (1) für die Kapsel (2) angeordnet sind.

5. Getränkezubereitungsmaschine nach einem der vorhergehenden Ansprüche, ebenso umfassend ein Halteelement (7) zum Halten der Kapsel (2).

6. Getränkezubereitungsmaschine nach Anspruch 2, wobei die fixierte Stanze (5) eine sich durch diese erstreckende Auslassleitung (6) für den Austritt des zubereiteten Getränks umfasst.

## Revendications

1. Machine de préparation de boissons, comprenant :
- un réceptacle (1) pour le placement d'une capsule (2) logeant un produit pour la préparation d'une boisson ;
- des moyens de perforation (4) pour la perforation de ladite capsule (2) de sorte à permettre l'entrée d'eau dans la capsule (2) ; et
- des moyens d'injection (3) pour l'injection d'eau dans ladite capsule (2) de sorte qu'elle soit mélangée avec le produit logé dans la capsule (2) pour la préparation de la boisson ;
lesdits moyens de perforation comprenant un seul poinçon mobile (4) qui peut se déplacer entre une position d'attente et une position d'injection,
dans laquelle ledit poinçon mobile (4) est monté dans un corps mobile (8) qui peut se déplacer entre la position d'attente et la position d'injection, et
dans laquelle ledit corps mobile (8) se déplace dans la position d'injection au moyen d'un corps de poussée (9) poussant contre l'action d'un ressort (10) ;
**caractérisée en ce que** ledit corps de poussée (9) est une came hélicoïdale rotative en contact avec une came complémentaire dans le corps mobile (8).

2. Machine de préparation de boissons selon la revendication 1, comprenant aussi un seul poinçon fixe (5) servant à la perforation de la capsule (2) pour la sortie de la boisson préparée.

3. Machine de préparation de boissons selon la revendication 1, dans laquelle lesdits moyens d'injection pour l'injection d'eau comprennent un conduit d'entrée d'eau (3) passant au travers de l'intérieur dudit poinçon mobile (4).

4. Machine de préparation de boissons selon les revendications 1 et 2, dans laquelle ledit poinçon mobile (4) et ledit poinçon fixe (5) sont agencés dans des positions opposées par rapport au réceptacle (1) pour la capsule (2).

5. Machine de préparation de boissons selon l'une quelconque des revendications précédentes, comprenant aussi un élément de maintien (7) pour maintenir ladite capsule (2).

6. Machine de préparation de boissons selon la revendication 2, dans laquelle ledit poinçon fixe (5) comprend un conduit de sortie (6) passant au travers de celui-ci pour la sortie de la boisson préparée.
